(19) Europäisches Patentamt

European Patent Office

Office européen des brevets

(11) **EP 1 499 817 B1**

(12) **EUROPÄISCHE PATENTSCHRIFT**

(45) Veröffentlichungstag und Bekanntmachung des Hinweises auf die Patenterteilung:
**02.11.2006 Patentblatt 2006/44**

(21) Anmeldenummer: **03746232.2**

(22) Anmeldetag: **10.04.2003**

(51) Int Cl.:
***F16G 5/18*** *(2006.01)*

(86) Internationale Anmeldenummer:
**PCT/DE2003/001189**

(87) Internationale Veröffentlichungsnummer:
**WO 2003/087621 (23.10.2003 Gazette 2003/43)**

(54) **VERFAHREN ZUM OPTIMIEREN VON LASCHEN EINER LASCHENKETTE SOWIE LASCHE FÜR EINE LASCHENKETTE**

METHOD FOR OPTIMISING PLATES OF A PLATE LINK CHAIN, AND PLATE FOR A PLATE LINK CHAIN

PROCEDE D'OPTIMISATION DES MAILLONS D'UNE CHAINE A MAILLONS, ET MAILLON POUR CHAINE A MAILLONS

(84) Benannte Vertragsstaaten:
**AT BE BG CH CY CZ DE DK EE ES FI FR GB GR HU IE IT LI LU MC NL PT RO SE SI SK TR**

(30) Priorität: **10.04.2002 DE 10215715**
**21.11.2002 DE 10254351**

(43) Veröffentlichungstag der Anmeldung:
**26.01.2005 Patentblatt 2005/04**

(73) Patentinhaber: **LuK Lamellen und Kupplungsbau Beteiligungs KG**
**77815 Bühl (DE)**

(72) Erfinder:
• **OBERLE, Wolfgang**
**77960 Seelbach (DE)**
• **TEUBERT, André**
**77815 Bühl (DE)**

(56) Entgegenhaltungen:
**EP-A- 0 741 255**      **US-A- 4 898 568**
**US-A- 5 026 331**

EP 1 499 817 B1

## Beschreibung

Die Erfindung betrifft ein Verfahren zum Optimieren von Laschen einer Laschenkette zur Verwendung in einem Variator eines Kegelscheibenumschlingungsgetriebes. Die Erfindung betrifft weiter eine Lasche für eine solche Laschenkette. Derartige Laschen und Laschenketten sind beispielsweise aus der US-A-4,898,568 bekannt.

Kegelscheibenumschlingungsgetriebe mit kontinuierlich variabler Übersetzung finden in modernen Kraftfahrzeugen nicht nur wegen des mit ihnen erzielbaren Fahrkomforts, sondern auch wegen möglicher Verbrauchseinsparungen zunehmend Verwendung.

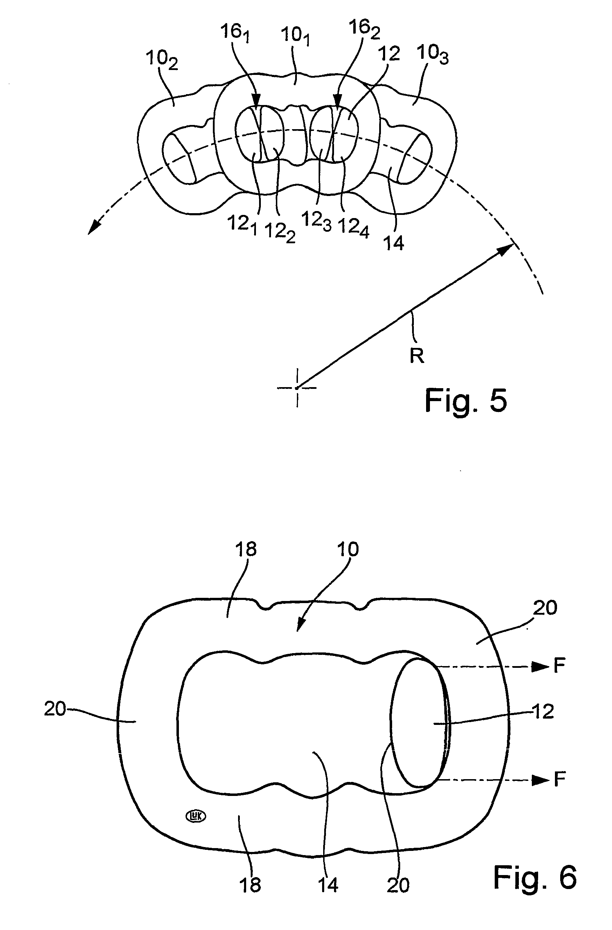

Ein für die Dauerhaltbarkeit und das Drehmomentübertragungsvermögen des Variators eines solchen Kegelscheibenumschlingungsgetriebes entscheidendes Bauteil ist das Umschlingungsmittel selbst, das beispielsweise als eine Laschenkette ausgeführt ist, wie sie in Fig. 5 in einem kleinen Ausschnitt schematisch dargestellt ist. Eine solche Laschenkette ist aus Laschen 10 zusammengesetzt, die über Wiegestücke 12 miteinander verbunden sind. Die Laschen 10 sind in mehreren, bezüglich der Laufrichtung der Laschenkette nebeneinander angeordneten Reihen hintereinander angeordnet, wobei in Fig. 5 die Lasche $10_1$ einer in Blickrichtung vordersten Reihe angehört, die Lasche $10_2$ einer der vordersten Reihe benachbarten Reihe angehört und die Lasche $10_3$ einer weiteren Reihe angehört. Zur Verbindung der Laschen sind die Wiegestücke 12 vorgesehen, die die Laschenöffnungen 14 jeweils quer zur Laufrichtung durchdringen. Dabei wird jede Laschenöffnung von zwei Wiegestückpaaren $16_1$ und $16_2$ durchdrungen, wobei zum Wiegestückpaar $16_1$ die Laschen $12_1$ und $12_2$ gehören und zum Wiegestückpaar $16_2$ die Wiegestücke $12_3$ und $12_4$ gehören. Wie ersichtlich, stützen sich die Außenseiten der von einander abgewandten Wiegestücke $12_1$ und $12_4$ der Wiegestückpaare $16_1$ bzw. $16_2$ an der bezogen auf die Laufrichtung der Laschenkette vorderen bzw. hinteren Innenseite der Laschenöffnung 14 ab. Die aufeinander zugewandten Wiegestücke $12_2$ und $12_3$ stützen sich jeweils an Innenseiten von Laschenöffnungen von Laschen ab, die in benachbarten Reihen angeordnet sind. Die aufeinander zugewandten Flächen der Wiegestücke jedes Wiegestückpaares bilden Wälzflächen, auf denen sich die Wiegestücke aneinander abwälzen, wenn sich der Radius R, mit dem der jeweilige Bereich der Laschenkette gekrümmt ist, ändert.

Eine solche Laschenkette sowie der zugehörige Variator mit zwei Kegelscheibenpaaren, um die die Laschenkette umläuft, ist an sich bekannt und wird daher nicht beschrieben.

Fig. 6 zeigt eine Lasche 10 und ein Wiegestück 12 in vergrößertem Maßstab.

Das Wiegestück 12 weist zwei Längsschenkel 18 und zwei Hochschenkel 20 auf, die gemeinsam die Laschenöffnung 14 umschließen. Das Wiegestück 12, dessen Wälzfläche mit 20 bezeichnet ist, liegt gemäß Fig. 6 rechtsseitig an der Innenseite der Laschenöffnung 14 an, wobei die Anlageflächen derart aufeinander abgestimmt sind, dass eine Anlage nur im Bereich des Übergangs zwischen den Längsschenkeln 18 zu den Hochschenkeln 20 erfolgt und im Bereich der Mitte des Hochschenkels 20 keine Anlage erfolgt. Wenn sich die Lasche 10 gemäß Fig. 6 von rechts nach links bewegt, werden entsprechend der von der Laschenkette übertragenen Kraft an den Anlageflächen Kräfte übertragen, die in der Fig. jeweils durch Pfeile F dargestellt sind, die die Kraftschwerpunkte und Kraftrichtungen zeigen. Infolge des Versatzes der Kraftangriffspunkte gegenüber der Mitte der Längsschenkel wirken in den Längsschenkeln 18 sowohl Zugals auch Biegespannungen. Ebenso wirkt in den Hochschenkeln eine Biegespannung und eine Zugspannung.

Naturgemäß hängen die für eine Lasche erforderlichen Abmessungen bei vorbestimmtem Material und vorbestimmten geometrischen Rahmenbedingungen des jeweiligen Variators, beispielsweise dessen Teilung, minimalen und maximalen Umlaufradius der Laschenkette usw., sowie dem zu übertragenden Drehmoment von den in der Lasche wirksamen Spannungen ab.

Der Erfindung liegt die Aufgabe zugrunde, Laschen derart auszubilden, dass bei vorgegebenen Rahmenbedingungen die Lasche mit dem Ziel minimalen Materialaufwands und damit minimalen Gewichts optimiert ist.

Eine erste Lösung dieser Aufgabe wird erzielt mit einem Verfahren zum Optimieren von Laschen einer Laschenkette zur Verwendung in einem Variator eines Kegelscheibenumschlingungsgetriebes, welche Laschenkette in mehreren quer zur Laufrichtung der Laschenkette nebeneinander angeordneten Reihen hintereinander angeordnete Laschen aufweist, die sich quer zur Laufrichtung überlappen und die über sie quer zur Laufrichtung durchdringende Wiegestücke verbunden sind, wobei eine Öffnung jeder Lasche von zwei Wiegestückpaaren durchdrungen wird, deren voneinander abgewandten Wiegestücke an der vorderen bzw. hinteren Innenseite der Laschenöffnung anliegen und deren einander zugewandte Wiegestücke an der vorderen bzw. hinteren Innenseite von Laschenöffnungen benachbarter Laschen anliegen, wobei die einander zugewandten Flächen der Wiegestücke jedes Wiegestückpaares sich bei Krümmung der Laschenkette aneinander abwälzen, bei welchem Verfahren die Krafteinleitung von den Wiegestücken in die Laschen derart erfolgt, dass die aus der Krafteinleitung resultierende Biegebeanspruchung der in Laufrichtung verlaufenden Längsschenkel und/oder der senkrecht zur Laufrichtung verlaufenden Hochschenkel der Laschen unter vorgegebenen Randbedingungen minimiert wird.

Eine vorteilhafte Durchführungsform des erfindungsgemäßen Verfahrens besteht darin, dass das Biegemoment MB der Längsschenkel entsprechend der folgenden Formel unter vorgegebenen Randbedingungen für die Laschenkette minimiert wird:

$$MB = \frac{F * He}{k+1} \bullet \left(1 - \frac{He}{L2}\right)$$

mit

$$k = \frac{I2 * L1}{I1 * L2},$$

wobei

F = eingeleitete Kraft
He = Hebelarm der eingeleiteten Kraft F
I1 = Flächenträgheitsmoment des Längsschenkels (= Schenkelhöhe³*Dicke/12)
I2 = Flächenträgheitsmoment des Hochschenkels (= Schenkelbreite³*Dicke/12)
L1 = Gesamtlänge des Längsschenkels
L2 = Gesamtlänge des Hochschenkels.

Das Biegemoment MA der Hochschenkel wird unter vorgegebenen Rahmenbedingungen für die Laschenkette nach folgender Formel minimiert:

$$MA = F * He * \left(1 - \frac{1}{k+1} \bullet \left(1 - \frac{He}{L2}\right) - \right)$$

mit

$$k = \frac{I2 * L1}{I1 * L2},$$

wobei

F = eingeleitete Kraft
He = Hebelarm der eingeleiteten Kraft F
I1 = Flächenträgheitsmoment des Längsschenkels (= Schenkelhöhe³*Dicke/12)
I2 = Flächenträgheitsmoment des Hochschenkels (= Schenkelbreite³*Dicke/12)
L1 = Gesamtlänge des Längsschenkels
L2 = Gesamtlänge des Hochschenkels.

Eine weitere Lösung der Erfindungsaufgabe wird erreicht mit einer Lasche für eine Laschenkette zur Verwendung in einem Variator eines Kegelscheibenumschlingungsgetriebes, welche Laschenkette in mehreren quer zur Laufrichtung der Laschenkette nebeneinander angeordneten Reihen hintereinander angeordnete Laschen aufweist, die sich quer zur Laufrichtung überlappen und die über sie quer zur Laufrichtung durchdringende Wiegestücke verbunden sind, wobei eine Öffnung jeder Lasche von zwei Wiegestückpaaren durchdrungen sind, deren voneinander abgewandten Wiegestücke an der vorderen bzw. hinteren Innenseite der Laschenöffnung anliegen und deren einander zugewandte Wiegestücke an der vorderen bzw. hinteren Innenseite von Laschenöffnungen benachbarter Laschen anliegen, wobei die einander zugewandten Flächen der Wiegestücke jedes Wiegestückpaares sich bei Krümmung der Laschenkette aneinander abwälzen, welche Lasche derart dimensioniert ist, dass das auf ihre in Laufrichtung der Laschenkette verlaufenden Längsschenkel und/oder das auf ihre senkrecht zur Laufrichtung der Laschenkette verlaufenden Hochschenkel infolge der Krafteinleitung von den Wiegestücken ausgeübte Biegemomente unter den vorgegebenen Randbedingungen minimal ist.

Bei einer vorteilhaften Ausführungsform der erfindungsgemäßen Lasche ist das Biegemoment MB der Längsschenkel entsprechend der folgenden Formel unter vorgegebenen Randbedingungen für die Laschenkette minimal:

$$MB = \frac{F * He}{k+1} \bullet \left(1 - \frac{He}{L2}\right)$$

mit

$$k = \frac{I2 * L1}{I1 * L2},$$

wobei

F = eingeleitete Kraft
He = Hebelarm der eingeleiteten Kraft F
I1 = Flächenträgheitsmoment des Längsschenkels (= Schenkelhöhe$^3$*Dicke/12)
I2 = Flächenträgheitsmoment des Hochschenkels (= Schenkelbreite$^3$*Dicke/12)
L1 = Gesamtlänge des Längsschenkels
L2 = Gesamtlänge des Hochschenkels.

Bei einer weiteren Ausführungsform ist das Biegemoment MA der Hochschenkel entsprechend der folgenden Formel unter vorgegebenen Randbedingungen für die Laschenkette minimal ist:

$$MA = F * He * \left(1 - \frac{1}{k+1} \bullet \left(1 - \frac{He}{L2}\right) - \right)$$

mit

$$k = \frac{I2 * L1}{I1 * L2},$$

wobei

F = eingeleitete Kraft

He = Hebelarm der eingeleiteten Kraft F

I1 = Flächenträgheitsmoment des Längsschenkels (= Schenkelhöhe$^3$*Dicke/12)

I2 = Flächenträgheitsmoment des Hochschenkels (= Schenkelbreite$^3$*Dicke/12)

L1 = Gesamtlänge des Längsschenkels

L2 = Gesamtlänge des Hochschenkels.

Der Wert für k liegt vorteilhafterweise zwischen 1 und 3,5.
Die Erfindung wird im folgenden anhand schematischer Zeichnungen beispielsweise und mit weiteren Einzelheiten erläutert.
Es stellen dar:

Fig. 1 ein einfaches Modell einer Lasche in Seitenansicht,

Fig. 2 einen Ausschnitt des Modells der Fig. 1 zur Erläuterung von Schnittkräften und - momenten,

Fig. 3 einen Ausschnitt der Fig. 1 zur Erläuterung des Verlaufes der Biegemomente,

Fig. 4 eine Seitenansicht einer Hälfte einer herkömmlichen und einer optimierten Lasche,

Fig. 5 einen Ausschnitt einer mit einem Radius R umlaufenden Laschenkette und

Fig. 6 eine Seitenansicht einer an sich bekannten Lasche mit einem darin angeordneten Wiegestück.

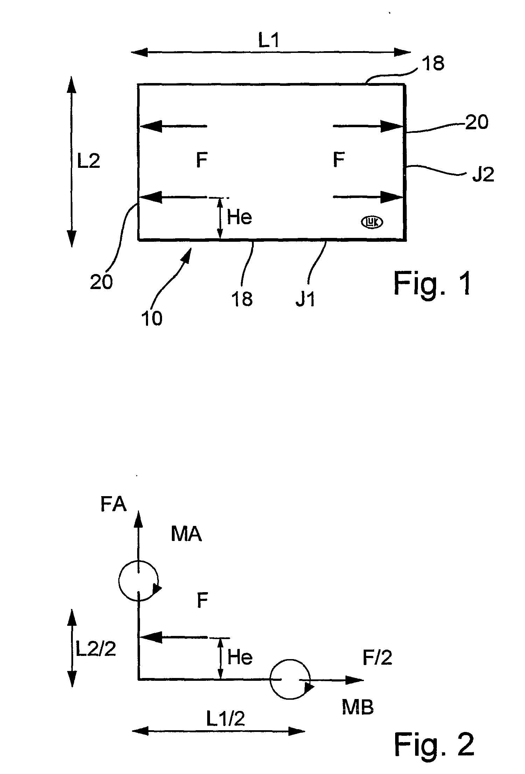

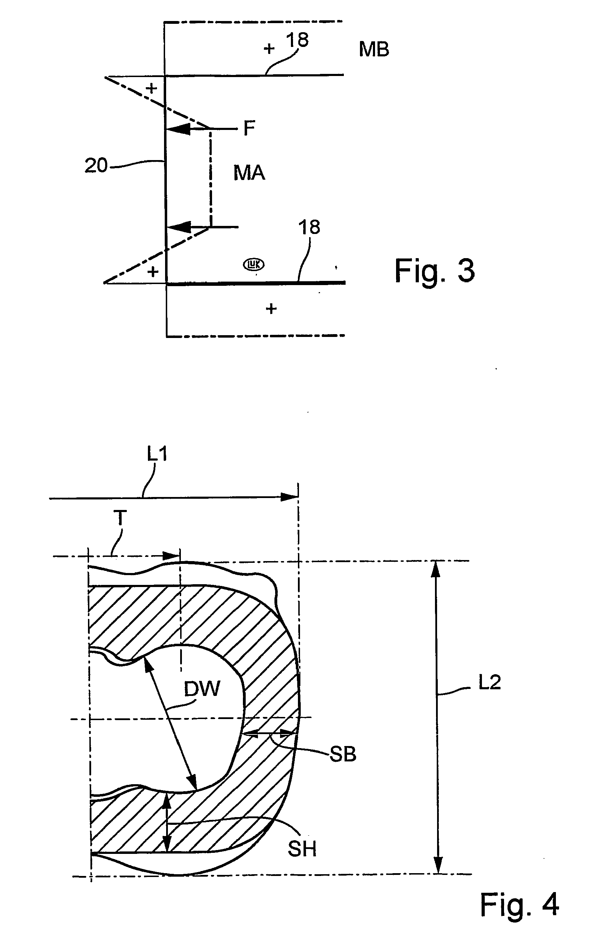

Fig. 1 ist eine vereinfachte schematische Darstellung der Lasche 20 der Fig. 6, die durch das dick eingezeichnete Rechteck mit den Längsschenkeln 18 und den Hochschenkeln 20 dargestellt ist. L1 bezeichnet die Gesamtlänge eines Längsschenkels bzw. der Lasche. L2 bezeichnet die Gesamtlänge eines Hochschenkels 20 bzw. der Höhe der Lasche. Die Pfeile F verdeutlichen, wie in Fig. 6, die wirkenden Kräfte. He bezeichnet den Abstand der Wirklinie der benachbart zu einem Längsschenkel wirkenden Kraft von dem Längsschenkel bzw. die Länge des auf die Längsschenkel bezogenen Hebelarms der Kraft F. J2 bezeichnet das Flächenträgheitsmoment des Längsschenkels, d.h. $SH^3*D/12$, wobei SH die Höhe des Längsschenkels ist (Fig. 4). Das Flächenträgheitsmoment I2 des Hochschenkels beträgt $SB^3*D/12$, wobei SB die Breite des Hochschenkels ist (Fig. 4) und D die Dicke der Lasche ist.
Fig. 2 verdeutlicht die betrachteten Schnittkräfte und Momente, wobei FA die im Hochschenkel wirksame, in Richtung des Hochschenkels verlaufende Kraft ist, MA das infolge der von der Lasche übertragenen, in Längsrichtung der Laschenkette wirksamen Kraft F hervorgerufene Biegemoment des Hochschenkels ist und MB das von der Kraft F hervorgerufene Biegemoment des Längsschenkels ist. Es versteht sich, dass mit F jeweils die gesamte, von einem Bügel übertragene Kraft bezeichnet ist, von der jeder Längsschenkel die Hälfte aufnimmt.
Fig. 3 verdeutlicht die infolge der Kraft in einem Hochschenkel 20 und den Längsschenkeln 18 wirksamen Biegemomente MA und MB.
Eine Analyse und Berechnung, bei denen die Biegemomentverläufe zunächst abschnittsweise ermittelt und dann die Biegemomente insgesamt ermittelt werden, ergibt das Bild der Fig. 3. Das Biegemoment im Hochschenkel 20 ist ausgehend von dessen Mitte nach außen zunächst konstant und einwärts (-) gerichtet, nimmt dann auf Null ab, um auswärts (+) gerichtet zu sein und ist längs der gesamten Längsschenkel 18 konstant und auswärts gerichtet. Die Größe des Biegemoments MB in den Längsschenkeln ergibt sich zu:

$$MB = \frac{F*He}{k+1} \bullet \left(1 - \frac{He}{L2}\right)$$

mit

$$k = \frac{I2*L1}{I1*L2}$$

Die Größe des Biegemoments MA in den Hochschenkeln ergibt sich zu:

$$MA = F * He - MB$$

$$MB = \frac{F * He}{k+1} \bullet \left(1 - \frac{He}{L2}\right)$$

und

$$k = \frac{I2 * L1}{I1 * L2}$$

$$MA = F * He * \left[1 - \frac{1}{k+1} \bullet \left(1 - \frac{He}{L2}\right) - \right]$$

Insgesamt lassen sich folgende Abhängigkeiten und Einflüsse feststellen:

Das Biegemoment MB in den Längsschenkeln ist über die gesamte Länge L1 konstant. Der Einfluss des Hebelarms He auf das Biegemoment MB ist nahezu linear. Nimmt das Verhältnis Länge des Längsschenkels L1 zur Länge des Hochschenkels L2 zu, so nimmt das Biegemoment MB ab. Nimmt das Verhältnis 12/11 zu, so nimmt das Biegemoment MB ebenfalls ab. Je steifer der Hochschenkel im Vergleich zum Längsschenkel ist, um so weniger Biegemoment wird in den Längsschenkel eingeleitet. Eine Reduzierung der Höhe SH des Längsschenkels bewirkt eine verhältnismäßig geringe Zunahme der Oberspannung im Längsschenkel (Spannung in dessen äußerem Bereich). Weiter wir dadurch der Anteil der Biegespannung an der Oberspannung gemindert. Im Bereich von 40% bis 70% der Höhe des Längsschenkels bleibt die Oberspannung nahezu konstant. Weiter ergeben die analytischen Betrachtungen, dass, je größer die Länge L1 der Lasche im Vergleich zur Höhe L2 der Lasche ist, um so niedriger ist die Biegespannung im Längsschenkel.

Für das Biegemoment MA gelten analoge Abhängigkeiten.

Vorgenannte Formeln ermöglichen unter Berücksichtigung der jeweiligen Randbedingungen, wie verfügbare Bauform, Teilung der Laschenkette, zu übertragende Kraft usw. die Biegebeanspruchung bzw. das Biegemoment MB der Längsschenkel 18 bzw. das Biegemoment MA der Hochschenkel 20 zu minimieren, wodurch das benötigte Material und damit das Gewicht bei vorgegebener zu übertragender Kraft F abgesenkt werden kann. Zur Minimierung von MB bzw. MA nach den vorgenannten Formeln können die unterschiedlichsten mathematischen Methoden eingesetzt werden, wobei mindestens jeweils eine der variablen Größen verändert wird und deren Einfluss auf MB bzw. MA untersucht wird, bis MB bzw. MA insgesamt unter den vorgegebenen Randbedingungen minimal wird.

Es versteht sich, dass nur MA oder nur MB minimiert werden kann, wobei es vorteilhaft ist, beide aufeinander abgestimmt zu minimieren.

Fig. 4 zeigt das Ergebnis einer Optimierung, bei der die Teilung T (Abstand zwischen den Wiegeflächen benachbarter Wiegestückpaare), die Länge L1, die Dicke des Wiegestückes und die zu übertragende Kraft konstant gehalten wurden. DW gibt den wirksamen Durchmesser eines durch ein Wiegestückpaar gebildetes Lager an. Die innerste Konturlinie und äußerste Konturlinie zeigen die Ausgangskontur eines Wiegestücks. Der schraffierte Bereich zeigt die Kontur eines optimierten Wiegestücks. Wie ersichtlich, konnte die Höhe des Längsschenkels deutlich vermindert werden, ohne dass das Kraftübertragungsvermögen des Wiegestücks nachteilig beeinflusst wurde.

Die aus Fig. 4 ersichtliche Materialeinsparung hat den zusätzlichen Vorteil, dass die Laschenkette für höhere Drehzahlen geeignet ist, da die Fliehkräfte vermindert sind.

Die nachfolgende Tabelle gibt Beispiele vorteilhafter Wertebereich an:

| Komponente | Sinnvolle Tendenz für $k_{minimal}$ | 1.1 Vorteilhaft Wertebereich |
|---|---|---|
| $I1=(BH1^3)*T/12$ | BH1 möglichst klein | $2{,}4 < BH1 < 3{,}0$ |

(fortgesetzt)

| Komponente | Sinnvolle Tendenz für $k_{minimal}$ | 1.1 Vorteilhaft Wertebereich |
|---|---|---|
| I2=(BB2³)*T/12 | BB2 möglichst groß | 2,7<BB2<3,0 |
| L1 | L1 möglichst groß | Maximal 20,5 mm |
| L2 | L2 möglichst klein | 11,6<L2<13 |

Der Faktor k liegt vorteilhafterweise zwischen 1 und 3,5.

Durch die erfindungsgemäße Optimierung der Biegebeanspruchungen der Längs- und Hochschenkel ist es möglich, in geringerem Bauraum Laschenketten mit größerem Kraft- bzw. Drehmomentübertragungsvermögen unterzubringen, wodurch der Gesamtbauraumbedarf des Variators vermindert ist. Dies wird vor allem mit einem optimierten Verhältnis zwischen den Abmessungen L1 und L2 und den Trägheitsmomenten I1 und I2 erreicht.

Die mit der Anmeldung eingereichten Patentansprüche sind Formulierungsvorschläge ohne Präjudiz für die Erzielung weitergehenden Patentschutzes. Die Anmelderin behält sich vor, noch weitere, bisher nur in der Beschreibung und/oder den Zeichnungen offenbarte Merkmalskombinationen zu beanspruchen.

In Unteransprüchen verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbstständigen, gegenständlichen Schutzes für die Merkmalskombinationen der rückbezogenen Unteransprüche zu verstehen.

Da die Gegenstände der Unteransprüche im Hinblick auf den Stand der Technik am Prioritätstag eigene und unabhängige Erfindungen bilden können, behält die Anmelderin sich vor, sie zum Gegenstand unabhängiger Ansprüche oder Teilungserklärungen zu machen. Sie können weiterhin auch selbstständige Erfindungen enthalten, die eine von den Gegenständen der vorhergehenden Unteransprüche unabhängige Gestaltung aufweisen.

Die Ausführungsbeispiele sind nicht als Einschränkung der Erfindung zu verstehen. Vielmehr sind im Rahmen der vorliegenden Offenbarung zahlreiche Abänderungen und Modifikationen möglich, insbesondere solche Varianten, Elemente und Kombinationen und/oder Materialien, die zum Beispiel durch Kombination oder Abwandlung von einzelnen in Verbindung mit den in der allgemeinen Beschreibung und Ausführungsformen sowie den Ansprüchen beschriebenen und in den Zeichnungen enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen, auch soweit sie Herstell-, Prüf- und Arbeitsverfahren betreffen.

**Patentansprüche**

1. Verfahren zum Optimieren von Laschen einer Laschenkette zur Verwendung in einem Variator eines Kegelscheibenumschlingungsgetriebes, welche Laschenkette in mehreren quer zur Laufrichtung der Laschenkette nebeneinander angeordneten Reihen hintereinander angeordnete Laschen (10) aufweist, die sich quer zur Laufrichtung überlappen und die über sie quer zur Laufrichtung durchdringende Wiegestücke (12) verbunden wird, wobei eine Öffnung (14) jeder Lasche von zwei Wiegestückpaaren durchdrungen sind, deren voneinander abgewandte Wiegestücke an der vorderen bzw. hinteren Innenseite der Laschenöffnung anliegen und deren einander zugewandte Wiegestücke an der vorderen bzw. hinteren Innenseite von Laschenöffnungen benachbarten Laschen anliegen, wobei die einander zugewandten Flächen der Wiegestücke jedes Wiegestückpaares sich bei Krümmung der Laschenkette aneinander abwälzen, **dadurch gekennzeichnet, dass** die Krafteinleitung von den Wiegestücken in die Laschen derart erfolgt, dass die aus der Krafteinleitung resultierende Biegebeanspruchung der in Laufrichtung verlaufenden Längsschenkel (18) und/oder der senkrecht zur Laufrichtung verlaufenden Hochschenkel (20) der Laschen unter vorgegebenen Randbedingungen minimiert wird.

2. Verfahren nach Anspruch 1, wobei das Biegemoment (MB) der Längsschenkel (18) entsprechend der folgenden Formel unter vorgegebenen Randbedingungen für die Laschenkette minimiert wird:

$$MB = \frac{F * He}{k+1} \bullet \left(1 - \frac{He}{L2}\right)$$

mit

$$k = \frac{I2 * L1}{I1 * L2},$$

wobei

F = eingeleitete Kraft
He = Hebelarm der eingeleiteten Kraft F
I1 = Flächenträgheitsmoment des Längsschenkels (= Schenkelhöhe$^3$*Dicke/12)
I2 = Flächenträgheitsmoment des Hochschenkels (= Schenkelbreite$^3$*Dicke/12)
L1 = Gesamtlänge des Längsschenkels
L2 = Gesamtlänge des Hochschenkels.

3. Verfahren nach Anspruch 1 oder 2, wobei das Biegemoment (MA) der Hochschenkel (20) entsprechend der folgenden Formel unter vorgegebenen Randbedingungen für die Laschenkette minimiert wird:

$$MA = F * He * \left(1 - \frac{1}{k+1} * \left(1 - \frac{He}{L2}\right) - \right)$$

mit

$$k = \frac{I2 * L1}{I1 * L2},$$

wobei

F = eingeleitete Kraft
He = Hebelarm der eingeleiteten Kraft F
I1 = Flächenträgheitsmoment des Längsschenkels (= Schenkelhöhe$^3$*Dicke/12)
I2 = Flächenträgheitsmoment des Hochschenkels (= Schenkelbreite$^3$*Dicke/12)
L1 = Gesamtlänge des Längsschenkels
L2 = Gesamtlänge des Hochschenkels.

4. Lasche für eine Laschenkette zur Verwendung in einem Variator eines Kegelscheibenumschlingungsgetriebes, welche Laschenkette in mehreren quer zur Laufrichtung der Laschenkette nebeneinander angeordneten Reihen hintereinander angeordnete Laschen (10) aufweist, die sich quer zur Laufrichtung überlappen und die über sie quer zur Laufrichtung durchdringende Wiegestücke (12) verbunden sind, wobei eine Öffnung (14) jeder Lasche von zwei Wiegestückpaaren durchdrungen wird, deren voneinander abgewandte Wiegestücke an der vorderen bzw. hinteren Innenseite der Laschenöffnung anliegen und deren einander zugewandte Wiegestücke an der vorderen bzw. hinteren Innenseite von Laschenöffnungen benachbarter Laschen anliegen, wobei die einander zugewandten Flächen der Wiegestücke jedes Wiegestückpaares sich bei Krümmung der Laschenkette aneinander abwälzen, **dadurch gekennzeichnet, dass** die Lasche derart dimensioniert ist, dass das auf ihre in Laufrichtung der Laschenkette verlaufenden Längsschenkel (18) und/oder das auf ihre senkrecht zur Laufrichtung der Laschenkette verlaufenden Hochschenkel (20) infolge der Krafteinleitung von den Wiegestücken ausgeübte Biegemoment unter den vorgegebenen Randbedingungen minimal ist.

5. Lasche nach Anspruch 4, wobei das Biegemoment (MB) der Längsschenkel (18) entsprechend der folgenden Formel unter vorgegebenen Randbedingungen für die Laschenkette minimal ist:

$$MB = \frac{F * He}{k+1} \bullet \left(1 - \frac{He}{L2}\right)$$

mit

$$k = \frac{I2 * L1}{I1 * L2},$$

wobei

F = eingeleitete Kraft
He = Hebelarm der eingeleiteten Kraft F
I1 = Flächenträgheitsmoment des Längsschenkels (= Schenkelhöhe$^3$*Dicke/12)
I2 = Flächenträgheitsmoment des Hochschenkels (=Schenkelbreite$^3$*Dicke/12)
L1 = Gesamtlänge des Längsschenkels
L2 = Gesamtlänge des Hochschenkels.

6. Lasche nach Anspruch 4 oder 5, wobei das Biegemoment (MA) der Hochschenkel (20) entsprechend der folgenden Formel unter angegebenen Randbedingungen für die Laschenkette minimal ist:

$$MA = F * He * \left(1 - \frac{1}{k+1} * \left(1 - \frac{He}{L2}\right) - \right)$$

mit

$$k = \frac{I2 * L1}{I1 * L2},$$

wobei

F = eingeleitete Kraft
He = Hebelarm der eingeleiteten Kraft F
I1 = Flächenträgheitsmoment des Längsschenkels (= Schenkelhöhe$^3$*Dicke/12)
I2 = Flächenträgheitsmoment des Hochschenkels (= Schenkelbreite$^3$*Dicke/12)
L1 = Gesamtlänge des Längsschenkels
L2 = Gesamtlänge des Hochschenkels.

7. Lasche nach Anspruch 5 oder 6, wobei $1 < k < 3,5$.

**Claims**

1. A method for optimizing plates of a plate link chain for use in a variator of a belt-driven conical-pulley transmission, which plate link chain has plates (10) that are arranged one after another in a plurality of rows that are positioned side by side transverse to the running direction of the plate link chain, which plates overlap transverse to the running direction, and which is connected through rocker members (12) that penetrate them transverse to the running direction, where an opening (14) in each plate is penetrated by two pairs of rocker members, and the rocker members that face away from each other rest on the front and/or rear inner surfaces of the plate opening, and the rocker members that face toward each other rest on the front and rear inner surfaces of the plate openings of adjacent plates, wherein the surfaces facing each other of the rocker members of each pair of rocker members roll off each other when the plate link chain curves, **characterized in that** the introduction of force from the rocker members into the plates takes place in such a manner that the bending load on the longitudinal arm (18) running in the running direction and/or on the high arm (20) of the plates running perpendicular to the running direction resulting from the introduction of force are minimized under specified boundary conditions.

2. A method according to Claim 1, wherein the bending moment (MB) of the longitudinal arm (18) corresponding to the following formula is minimized under specified boundary conditions for the plate link chain.

$$MB = \frac{F * He}{k+1} \bullet \left( 1 - \frac{He}{L2} \right)$$

with

$$k = \frac{I2 * L1}{I1 * L2},$$

wherein

    F = introduced force
    He = lever arm of the introduced force F
    I1 = areal moment of inertia of the (= arm height$^3$ * thickness/12) longitudinal arm
    I2 = areal moment of inertia of the high arm (= arm width$^3$ * thickness/12)
    L1 = total length of the longitudinal arm
    L2 = total length of the high arm

3. A method according to Claim 1 or 2, wherein the bending moment (MA) of the high arm (20) corresponding to the following formula is minimized under specified boundary conditions for the plate link chain.

$$MA = F * He * \left( 1 - \frac{1}{k+1} * \left( 1 - \frac{He}{L2} \right) - \right)$$

with

$$k = \frac{I2 * L1}{I1 * L2},$$

wherein

F = introduced force
He = lever arm of the introduced force F
I1 = areal moment of inertia of the (= arm height$^3$ * thickness/12) longitudinal arm
I2 = areal moment of inertia of the high arm (= arm width$^3$ * thickness/12)
L1 = total length of the longitudinal arm
L2 = total length of the high arm

4. A plate for a plate link chain for use in a variator of a belt-driven conical-pulley transmission, which plate link chain has plates (10) that are arranged one after another in a plurality of rows that are positioned side by side transverse to the running direction of the plate link chain, which plates overlap transverse to the running direction and which is connected through rocker members (12) that penetrate them transverse to the running direction, where an opening (14) in each plate is penetrated by two pairs of rocker members, and the rocker members that face away from each other rest on the front and rear inner surfaces of the plate opening, and the rocker members that face toward each other rest on the front and rear inner surfaces of plate openings of adjacent plates, wherein the surfaces facing each other of the rocker members of each pair of rocker members roll off each other when the plate link chain curves, **characterized in that** the plate is dimensioned so that the bending moment exerted on its longitudinal arm (18) running in the running direction of the plate link chain and/or exerted on its high arm (20) perpendicular to the running direction of the plate link chain resulting from the introduction of force from the rocker members is minimal under the specified boundary conditions.

5. A plate according to Claim 4, wherein the bending moment (MB) of the longitudinal arm (18) corresponding to the following formula is minimal under specified boundary conditions for the plate link chain.

$$MB = \frac{F * He}{k + 1} \bullet \left(1 - \frac{He}{L2}\right)$$

with

$$k = \frac{I2 * L1}{I1 * L2},$$

wherein

F = introduced force
He = lever arm of the introduced force F
I1 = areal moment of inertia of the (= arm height$^3$ * thickness/12) longitudinal arm
I2 = areal moment of inertia of the high arm (= arm width$^3$ * thickness/12)
L1 = total length of the longitudinal arm
L2 = total length of the high arm

6. A plate according to Claim 4 or 5, where the bending moment (MA) of the high arm (20) corresponding to the following formula is minimal under indicated boundary conditions for the plate link chain.

$$MA = F * He * \left(1 - \frac{1}{k + 1} * \left(1 - \frac{He}{L2}\right) - \right)$$

with

$$k = \frac{I2 * L1}{I1 * L2},$$

wherein

F = introduced force
He = lever arm of the introduced force F
I1 = areal moment of inertia of the (= arm height$^{3}$* thickness/12) longitudinal arm
I2 = areal moment of inertia of the high arm (= arm width$^{3}$ * thickness/12)
L1 = total length of the longitudinal arm
L2 = total length of the high arm

7. A plate according to Claim 5 or 6, wherein 1 < k < 3.5.

**Revendications**

1. Procédé permettant d'optimiser les maillons d'une chaîne à maillons, pour l'utilisation dans un variateur d'une transmission à poulies coniques et à enroulement, laquelle chaîne à maillons présente des maillons (10) disposés les uns derrière les autres, dans plusieurs rangées disposées les unes à côté des autres, de façon transversale par rapport au sens de rotation de la chaîne à maillons, maillons qui se chevauchent de façon transversale par rapport au sens de rotation et qui sont assemblés par des pièces mobiles (12) pénétrant de façon transversale par rapport au sens de rotation, où une ouverture (14) de chaque maillon est traversée par deux paires de pièces mobiles dont les pièces mobiles placées à l'opposé l'une de l'autre sont en appui sur le côté intérieur avant ou arrière de l'ouverture de maillon et dont les pièces mobiles tournées l'une vers l'autre sont en appui sur le bord intérieur avant ou arrière d'ouvertures de maillons contigus, où les surfaces, tournées l'une vers l'autre, des pièces mobiles de chaque paire de pièces mobiles roulent l'une contre l'autre au niveau de la courbure de la chaîne à maillons, **caractérisé en ce que** l'introduction de forces par des pièces mobiles, dans les maillons, se produit de manière telle, que la contrainte de flexion - résultant de l'introduction de forces - des branches longitudinales (18) s'étendant dans le sens de rotation et/ou des branches verticales (20) des maillons s'étendant de façon perpendiculaire au sens de rotation soit réduite au minimum dans des conditions limites prédéfinies.

2. Procédé selon la revendication 1, où le couple de flexion (MB) des branches longitudinales (18), dans des conditions limites prédéfinies pour la chaîne à maillons, est réduit au minimum selon la formule suivante :

$$MB = \frac{F * He}{k + 1} \bullet \left(1 - \frac{He}{L2}\right)$$

avec

$$k = \frac{I2 * L1}{I1 * L2},$$

où

F = force introduite
He = bras de levier de la force introduite F
I1 = couple surfacique d'inertie de la branche longitudinale (= hauteur de branche$^{3}$*épaisseur/12)

I2 = couple surfacique d'inertie de la branche verticale (= largeur de branche$^{3*}$épaisseur/12)

L1 = longueur totale de la branche longitudinale

L2 = longueur totale de la branche verticale.

3. Procédé selon la revendication 1 ou 2, où le couple de flexion (MA) des branches verticales (20), dans des conditions limites prédéfinies pour la chaîne à maillons, est réduit au minimum selon la formule suivante :

$$MA = F * He * \left(1 - \frac{1}{k+1} \bullet \left(1 - \frac{He}{L2}\right) - \right)$$

avec

$$k = \frac{I2 * L1}{I1 * L2},$$

où

F = force introduite

He = bras de levier de la force introduite F

I1 = couple surfacique d'inertie de la branche longitudinale (= hauteur de branche$^{3*}$épaisseur/12)

I2 = couple surfacique d'inertie de la branche verticale (= largeur de branche$^{3*}$épaisseur/12)

L1 = longueur totale de la branche longitudinale

L2 = longueur totale de la branche verticale.

4. Maillon pour une chaîne de maillons prévue pour l'utilisation dans un variateur d'une transmission à poulies coniques et à enroulement, laquelle chaîne à maillons présente des maillons (10) disposés les uns derrière les autres, dans plusieurs rangées disposées les unes à côté des autres, de façon transversale par rapport au sens de rotation de la chaîne à maillons, maillons qui se chevauchent de façon transversale par rapport au sens de rotation et qui sont assemblés par des pièces mobiles (12) pénétrant de façon transversale par rapport au sens de rotation, où une ouverture (14) de chaque maillon est traversée par deux paires de pièces mobiles dont les pièces mobiles placées à l'opposé l'une de l'autre sont en appui sur le côté intérieur avant ou arrière de l'ouverture de maillon et dont les pièces mobiles tournées l'une vers l'autre sont en appui sur le bord intérieur avant ou arrière d'ouvertures de maillons contigus, où les surfaces, tournées l'une vers l'autre, des pièces mobiles de chaque paire de pièces mobiles roulent l'une contre l'autre au niveau de la courbure de la chaîne à maillons,

**caractérisé en ce que** le maillon est dimensionné de manière telle que le couple de flexion exercé, suite à l'introduction de forces par les pièces mobiles, sur les branches longitudinales (18) du maillon s'étendant dans le sens de rotation de la chaîne à maillons et/ou le couple de flexion exercé sur les branches verticales (20) du maillon s'étendant de façon perpendiculaire au sens de rotation de la chaîne à maillons soit réduit au minimum dans les conditions limites prédéfinies.

5. Maillon selon la revendication 4, où le couple de flexion (MB) des branches longitudinales (18), dans des conditions limites prédéfinies pour la chaîne à maillons, est réduit au minimum selon la formule suivante :

$$MB = \frac{F * He}{k+1} \bullet \left(1 - \frac{He}{L2}\right)$$

avec

$$k = \frac{I2 * L1}{I1 * L2},$$

où

F = force introduite
He = bras à levier de la force introduite F
11 = couple surfacique d'inertie de la branche longitudinale (= hauteur de branche$^{3*}$épaisseur/12)
12 = couple surfacique d'inertie de la branche verticale (= largeur de branche$^{3*}$épaisseur/12)
L1 = longueur totale de la branche longitudinale
L2 = longueur totale de la branche verticale.

**6.** Maillon selon la revendication 4 ou 5, où le couple de flexion (MA) des branches verticales (20), dans des conditions limites prédéfinies pour la chaîne à maillons, est réduit au minimum selon la formule suivante :

$$MA = F * He * \left(1 - \frac{1}{k+1} \cdot \left(1 - \frac{He}{L2}\right) - \right)$$

avec

$$k = \frac{I2 * L1}{I1 * L2},$$

où

F = force introduite
He = bras à levier de la force introduite F
11 = couple surfacique d'inertie de la branche longitudinale (= hauteur de branche$^{3*}$épaisseur/12)
12 = couple surfacique d'inertie de la branche verticale (= largeur de branche$^{3*}$épaisseur/12)
L1 = longueur totale de la branche longitudinale
L2 = longueur totale de la branche verticale.

**7.** Maillon selon la revendication 5 ou 6, où 1 < k < 3,5.

Fig. 1

Fig. 2

Fig. 3

Fig. 4

Fig. 5

Fig. 6